# EUROPEAN PATENT APPLICATION

(11) **EP 4 566 864 A1**
(43) Date of publication of application: **11.06.2025**
(21) Application number: 23215276.9
(22) Date of filing: 08.12.2023
(51) Int. Cl.: B60L 7/10, B60L 53/60, B60L 58/15, B60L 58/16

(54) **SYSTEM AND METHOD OF CONTROLLING A MAXIMUM CHARGE LEVEL**

(71) Applicant: VOLVO TRUCK CORPORATION, 405 08 Göteborg (SE)
(72) Inventor: NORDHOLM, Linus, 436 40 Askim (SE); HOLMSTRÖM, Anders, 423 37 Torslanda (SE); SMIDEBRANT, Tobias, 415 51 Göteborg (SE); WILHELMSSON, Martin, 423 39 Torslanda (SE)
(74) Representative: Kransell & Wennborg KB

(57) **Abstract**

The present disclosure relates to a computer system comprising processing circuitry configured to set a maximum charge level of an energy storage in response to a vehicle specific net level of electric energy consumable by the high-voltage energy storage system from a charging position to an upcoming downhill slope, and a required charge power ability for the high-voltage energy storage system of the vehicle to receive a vehicle specific level of regenerative charge power at the downhill slope.

## Description

### TECHNICAL FIELD

The disclosure relates generally to charge planning. In particular aspects, the disclosure relates to a system and a method of controlling a maximum charge level of an energy storage system. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

Vehicles with an electric drive train may need to be charged at one or several vehicle charging stations along a route. The route, and/or which vehicle charging station(s) to use, may be determined using a route/charging planning system.

The large weight of an electrified heavy truck vehicle may require certain special reconsiderations when charging an energy storage system of such vehicle compared to e.g. charging a battery of a car. In particular, an upcoming downhill slope may be of such magnitude that the regenerative braking capacity of the vehicle will be exceeded if the state of charge level is too high before entering the downhill slope. There is thus a desire control charging of the energy storage system to enable for an optimum braking capacity at downhill slope operation.

### SUMMARY

According to a first aspect of the disclosure, there is provided a computer system comprising processing circuitry configured to control charging of a high-voltage energy storage system of a vehicle, the processing circuitry being configured to: determine at least one upcoming road path operable by the vehicle from a current charging position, and in response to the at least one upcoming road path comprising a downhill slope: obtain data of a reference level of regenerative charge power during operation at the downhill slope, and a net reference level of electric energy consumable from the charging position to the downhill slope, determine, based on the reference level of regenerative charge power and at least one vehicle specific parameter of the vehicle, a vehicle specific level of regenerative charge power for an electric traction motor of the vehicle for operating the vehicle at a desired vehicle speed at the downhill slope, determine, based on the net reference level of electric energy and the at least one vehicle specific parameter of the vehicle, a vehicle specific net level of electric energy consumable by the high-voltage energy storage system of the vehicle from the charging position to the downhill slope, determine a required charge power ability for the high-voltage energy storage system of the vehicle to receive the vehicle specific level of regenerative charge power at the downhill slope, set a maximum charge level of the high-voltage energy storage system in response to the vehicle specific net level of electric energy consumable by the high-voltage energy storage system and the required charge power ability, and control charging of the high-voltage energy storage system at the current charging position to an energy level to, or below, the maximum charge level.

The first aspect of the disclosure may seek to improve the braking capacity for a vehicle comprising an electric traction motor operable to propel the vehicle and to regenerate electric energy during braking. By determining a vehicle specific net level of electric energy consumable by the vehicle until arriving at the downhill slope, a technical benefit may include that a relatively reliable level of consumed energy by the specific vehicle may be determine. In a similar vein, by determining a vehicle specific level of regenerative charge power at the downhill slope, a technical benefit may include that relatively reliable level of regenerative charge power for the electric traction motor of the vehicle can be determined. Since vehicles may have different properties, such as, but not exclusively, different weight when e.g. being laden and unladen, different air drag resistance, different rolling resistance, etc. the net level of electric energy consumed by a high-voltage energy storage system may vary from vehicle to vehicle. In a similar vein, the level of regenerative charge power for an electric traction motor of the vehicle to operate the vehicle at a desired vehicle speed may also differ from vehicle to vehicle. The present disclosure thus takes vehicle specific parameters into account when determining the level consumed electric energy and level of regenerative charge power when setting the maximum charge level at the charging position. By obtaining data of a reference level of regenerative charge power during operation at the downhill slope, and a net reference level of electric energy consumable from the charging position to the downhill slope, the computational effort to determine the regenerative charge power as well as the level of electric energy consumable for the specific vehicle to which the computer system is coupled may be reduced.

As will be further detailed below, the data of a reference level of regenerative charge power as well as the data of a net reference level of electric energy consumable from the charging position to the downhill slope should preferably construed as data for a reference vehicle. The reference vehicle may be provided with parameters indicating a reference weight, a reference air drag resistance, a reference rolling resistance, etc. Hence, the reference vehicle may comprise a plurality of reference parameters. The reference parameters may optionally be stored in a memory of the computer system. The processing circuitry may, when determining the at least one upcoming road path, obtain data of the reference level of charge power and the net reference level of consumable electric energy by determining the reference level of charge power and the net reference level of consumable electric energy in response to the reference parameters. As an alternative, the processing circuitry may obtain the data by mapping data of the upcoming road path, such as distance, sections of propulsion and sections of braking, etc., and data of the downhill slope, such as distance and inclination, etc. with reference parameters of the reference vehicle. As a further non-limiting example, the processing circuitry may obtain the data from a pre-stored reference level of regenerative charge power and a pre-stored reference level of consumable electric energy of the memory.

The charge power ability should be understood to mean the ability of the high-voltage energy storage system to receive the electric power generated by the electric traction motor. In further detail, the ability for a high-voltage energy storage system to receive electric power is lower when the charge level of the high-voltage energy storage system is high compared to when the charge level of the high-voltage energy storage system is lower. As a non-limiting example, the charge power ability may be reduced when the charge level exceeds e.g. 80% of its maximum capacity. For such non-limiting example, the processing circuitry may advantageously set a reduced maximum charge level of the high-voltage energy storage system such that the charge level is below 80% of its maximum capacity when arriving at the downhill slope. The charge power ability may also refer to the energy capacity of the high-voltage energy storage system to absorb electric energy from the electric traction motor, alternatively in conjunction with an energy dissipation system arranged to dissipate electric power. Such energy dissipation system may, for example, comprise an electric brake resistor. The charge power ability may for example refer to the state of charge of the high-voltage energy storage system. The charge power ability may thus also refer to an energy available for the high-voltage energy storage system. Other vehicle systems or vehicle components may also affect the charge power ability, such as e.g. shafts, the transmission, cooling systems, high-voltage limitations, etc. A technical benefit may thus include that the brake capability of the electric traction motor is optimized and electric energy may not need to be dissipated during braking since the high-voltage energy storage system will be able to absorb the generated electric energy.

Furthermore, it should be readily understood that the first aspect is applicable for battery electric vehicles (BEV) as well as hybrid vehicles comprising an electric traction motor in combination with a conventional internal combustion engine, and for fuel cell electric vehicles (FCEV). In the latter example, the charging is controlled by feeding electric power from a fuel cell to the high-voltage energy storage system. As such, the first aspect can be operational during operation of the vehicle, i.e. when the vehicle is being driven. In addition to the examples presented above, the present disclosure is also applicable for vehicles that can charge a high-voltage battery while driving on a so-called e-highway that comprises conductive or inductive charge segments along the road. Also, the high-voltage energy storage system should be construed as an energy storage system capable of feeding electric power to an electric traction motor propelling the vehicle, as well as to be able to receive electric power during regenerative braking.

Also, the definition "control charging" should preferably be construed such that the processing circuitry interrupts charging of the high-voltage energy storage system when the charge level reaches the maximum charge level. As such, an operator of the vehicle may obviously charge to a lower charge level than the reduced maximum charge level should he/she desire to do so.

Optionally in some examples, including in at least one preferred example, the reference level of regenerative charge power during operation at the downhill slope, and the net reference level of electric energy consumable from the charging position to the downhill slope are determined for a nominal vehicle. A technical benefit may include, as also indicated above, that the computational effort for the processing circuitry may be reduced.

Optionally in some examples, including in at least one preferred example, the nominal vehicle comprises a pre-set weight and comprises a high-voltage energy storage system with a pre-set charge level. A technical benefit may include that the nominal vehicle may comprise a number of well-defined reference parameters which can be used by the processing circuitry when determining the vehicle specific level of regenerative charge power and the vehicle specific net level of electric energy consumable by the high-voltage energy storage system.

Optionally in some examples, including in at least one preferred example, the net reference level of electric energy consumable from the charging position to the downhill slope comprises a level of electric energy consumed and a level of electric energy generated from the charging position to the downhill slope.

Optionally in some examples, including in at least one preferred example, the vehicle specific parameter comprises a weight of the vehicle. A technical benefit may include that a parameter that may affect the electric consumption as well as the level of regenerative charge power to a relatively large extent is used as an input for determining the vehicle specific level of regenerative charge power and the vehicle specific net level of electric energy consumable by the high-voltage energy storage system.

Optionally in some examples, including in at least one preferred example, the vehicle specific parameter comprises a state of health of the high-voltage energy storage system of the vehicle.

Optionally in some examples, including in at least one preferred example, the processing circuitry is further configured to determine the vehicle specific level of regenerative charge power and the vehicle specific net level of electric energy consumable by the high-voltage energy storage system in response to an ambient condition. A technical benefit may include that real time data can be used to set an even further reliable and accurate maximum charge level.

Optionally in some examples, including in at least one preferred example, the ambient condition is a current weather condition.

Optionally in some examples, including in at least one preferred example, the vehicle specific level of regenerative charge power is determined in response to an estimated vehicle speed at the downhill slope.

Optionally in some examples, including in at least one preferred example, the processing circuitry is configured to control charging of the high-voltage energy storage system at the current charging position to the energy level to, or below, the maximum charge level only in response to the estimated vehicle speed exceeds a pre-set speed threshold limit. A technical benefit may include that the processing circuitry can be inhibited from performing the determinations described above as the low vehicle speed may not have a substantial impact on the regenerative charge power. Hence, it can be estimated that the high-voltage energy storage system can receive the electric power generated at the downhill slope when the vehicle speed is relatively low.

Optionally in some examples, including in at least one preferred example, the processing circuitry is configured to control charging of the high-voltage energy storage system at the current charging position to the energy level to, or below, the maximum charge level only in response to a distance from the charging position to the downhill slope being less than a pre-set distance threshold limit. A technical benefit may include that the processing circuitry can be inhibited from performing the determinations described above as it can be assumed that a sufficient level of electric power will be consumed until arriving at the downhill slope. It can thus be assumed that the high-voltage energy storage system will not have an increased ability to absorb electric power if setting a reduced charge level at the charging position.

Optionally in some examples, including in at least one preferred example, the at least one upcoming road path comprises a first road path comprising a first downhill slope, and a second road path comprising a second downhill slope, wherein the processing circuitry is configured to: obtain data of a reference level of regenerative charge power during operation at the first downhill slope and the second downhill slope, and a net reference level of electric energy consumable from the charging position to the first downhill slope and from the charging position to the second downhill slope, determine the vehicle specific level of regenerative charge power for the electric traction motor based on the downhill slope, of the first and second downhill slopes, generating the largest reference level of regenerative charge power.

Optionally in some examples, including in at least one preferred example, the processing circuitry is configured to determine the vehicle specific net level of electric energy consumable by the high-voltage energy storage system from the charging position to the downhill slope, of the first downhill slope and the second downhill slope, generating the largest reference level of regenerative charge power. A technical benefit may include that a precautionary measure can be taken, in particular if it is not fully determined which road path the vehicle will follow after leaving the charging position.

Optionally in some examples, including in at least one preferred example, the processing circuitry is configured to divide the at least one upcoming road path into a plurality of road path sections, and obtain data of the net reference level of electric energy consumable from the charging position to the downhill slope for each of the road path sections. A technical benefit may include that the characteristics for each road path section can be evaluated separately, which may reduce the computational effort for the processing circuitry even further. If, for example, the road path is splitting up in two potential road paths to be operated ahead, the processing circuitry may only obtain data of the consumable net reference level of electric energy and to determine the vehicle specific net level of consumable electric energy for the road path up to the split. Thereafter, the processing circuitry can obtain data for the two potential road path sections separately.

Optionally in some examples, including in at least one preferred example, the at least one upcoming road path section is determined in response to a manually inputted destination request.

According to a second aspect, there is provided a vehicle comprising the computer system of any of the examples described above in relation to the first aspect.

Effects and features of the second aspect are largely analogous to those described above in relation to the first aspect.

According to a third aspect, there is provided a computer-implemented method, comprising: determining, by processing circuitry of a computer system, at least one upcoming road path operable by the vehicle from a current charging position, and in response to the at least one upcoming road path comprising a downhill slope: obtaining, by the processing circuitry, data of a reference level of regenerative charge power during operation at the downhill slope, and a net reference level of electric energy consumable from the charging position to the downhill slope, determining, by the processing circuitry and based on the reference level of regenerative charge power and at least one vehicle specific parameter of the vehicle, a vehicle specific level of regenerative charge power for an electric traction motor of the vehicle for operating the vehicle at a desired vehicle speed at the downhill slope, determining, by the processing circuitry and based on the net reference level of electric energy and the at least one vehicle specific parameter of the vehicle, a vehicle specific net level of electric energy consumable by the high-voltage energy storage system of the vehicle from the charging position to the downhill slope, determining, by the processing circuitry, a required charge power ability for the high-voltage energy storage system of the vehicle to receive the vehicle specific level of regenerative charge power at the downhill slope, setting, by the processing circuitry, a maximum charge level of the high-voltage energy storage system in response to the vehicle specific net level of electric energy consumable by the high-voltage energy storage system and the required charge power ability, and controlling, by the processing circuitry, charging of the high-voltage energy storage system at the current charging position to an energy level to, or below, the maximum charge level.

Effects and features of the third aspect are largely analogous to those described above in relation to the first aspect.

According to a fourth aspect, there is provided a computer program product comprising program code for performing, when executed by the processing circuitry, the method of the third aspect.

According to a fifth aspect, there is provided a non-transitory computer-readable storage medium comprising instructions, which when executed by the processing circuitry, cause the processing circuitry to perform the method of the third aspect.

Effects and features of the fourth and fifth aspects are largely analogous to those described above in relation to the first aspect.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits.

### BRIEF DESCRIPTION OF THE DRAWINGS

Examples are described in more detail below with reference to the appended drawings.
Fig. 1 is an exemplary illustration of a vehicle according to an example,
Fig. 2 is an exemplary graph illustrating a relationship between charge level and charge power ability of a high-voltage energy storage system according to an example,
Fig. 3 is an exemplary illustration of upcoming road paths from a charging position according to an example,
Fig. 4 is an exemplary illustration of a reference vehicle according to an example,
Fig. 5 is an exemplary flow chart of a method of controlling charging of a high-voltage energy storage system, and
Fig. 6 is a schematic diagram of an exemplary computer system for implementing examples disclosed herein, according to an example.

### DETAILED DESCRIPTION

The detailed description set forth below provides information and examples of the disclosed technology with sufficient detail to enable those skilled in the art to practice the disclosure.

The disclosure described in the following may seek to improve the braking capability for a vehicle at least partly propelled by an electric traction motor, which electric traction motor is operable to generate electric power during braking.

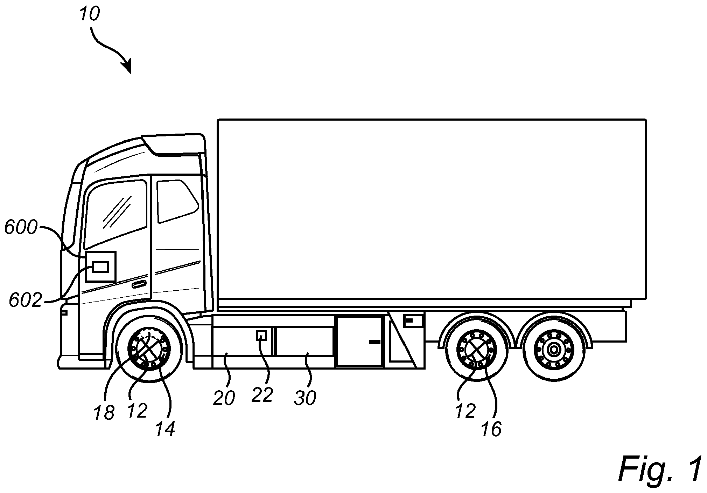

Turning to Fig. 1 which is an exemplary illustration of a vehicle 10 according to an example. The exemplified vehicle 10 is configured to be at least partly propelled by one or more electric traction motors 12. In Fig. 1, the electric traction motors 12 are exemplified as wheel hub motors connected to the pair of front wheels 14 as well as to the foremost pair of rear wheels 16. However, the vehicle 10 may alternatively comprises a single electric traction motor connected to the wheels via a conventional propulsion shaft (not shown). The at least one electric traction motor 12 is configured to apply a propulsive power to the wheels of the vehicle during propulsion, and to generate electric power during braking.

The vehicle further comprises a high-voltage energy storage system 20, also referred to as a high-voltage vehicle battery. The high-voltage energy storage system 20 is configured to feed electric power to the electric traction motor 12 during propulsion of the vehicle 10 and to receive electric power during braking. The high-voltage energy storage system 20 can be charged externally at a charge socket 22. In further detail, the high-voltage energy storage system 20 can be charge at a charging station by attaching a charge plug of a charging cable to the charge socket 22.

According to a non-limiting example, the vehicle 10 may also comprise a fuel cell 30 configured to generate electric energy, which electric energy can be fed to the high-voltage energy storage system 20 during operation of the vehicle 10, or when the vehicle 10 is standing still. Such fuel cell 30 preferably generates electric energy during a chemical reaction of hydrogen and oxygen. Thus, the vehicle 10 preferably comprises a gas tank (not shown) comprising hydrogen gas to be fed to the fuel cell. Hence, the high-voltage energy storage system 20 can be charged while the vehicle 10 is being driven.

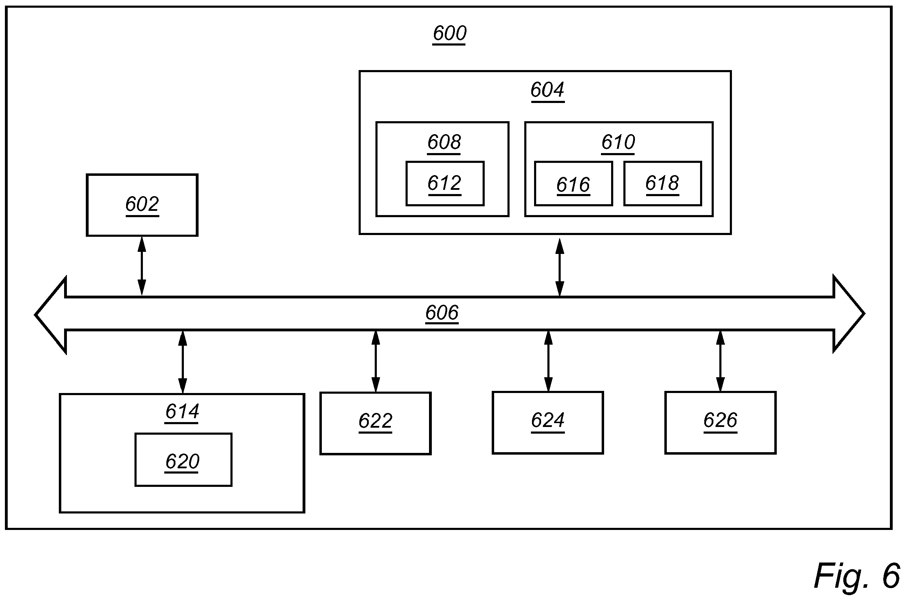

Furthermore, the vehicle 10 also comprises a computer system 600. The computer system 600 comprises processing circuitry 602 which, amongst other things, is configured to control a charge level of the high-voltage energy storage system 20 either when the vehicle 10 is stationary and charged at a charging station and/or when the high-voltage energy storage system 20 is charged by electric power generated by the fuel cell 30 when the vehicle 10 is driven. Exemplified details of the computer system 600 and the processing circuitry 602 will be given below in relation to the description of Fig. 6.

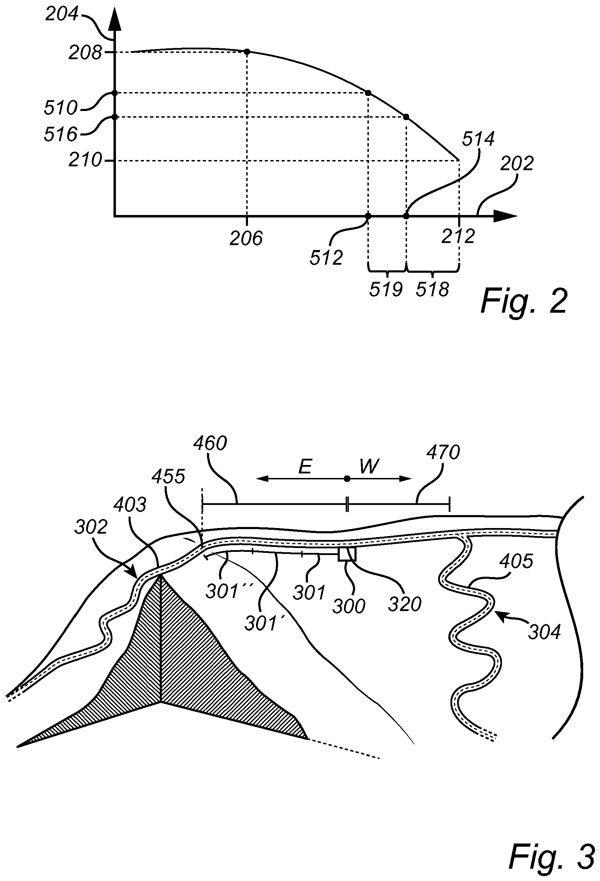

During charging of the high-voltage energy storage system 20 by electric power generated by the electric traction motor 12, the high-voltage energy storage system 20 may be susceptible to different levels of charge power in dependency of its current charge level. This is in the following referred to as the charge power ability of the high-voltage energy storage system 20. With particular reference to Fig. 2, which is an exemplary graph illustrating a relationship between charge level and charge power ability of the high-voltage energy storage system 20 according to an example.

In Fig. 2, the abscissa indicates the charge level 202 of the energy storage system 20 and the ordinate indicates the charge power ability 204 of the energy storage system 20. As exemplified in Fig. 2, the charge power ability 204 is continuously reduced from a predetermined or pre-set charge level 206 of the high-voltage energy storage system 20. Thus, for a charge level 202 below the predetermined or pre-set charge level 206, the high-voltage energy storage system 20 can absorb a maximum level of charge power, which maximum level can vary from energy storage system to energy storage system. Thus, below the predetermined or pre-set charge level 206, the charge power ability 204 is at a maximum charge power ability 208. For a charge level 202 higher than the predetermined or pre-set charge level 206, the charge power ability 204 is reduced. Accordingly, by reducing the charge level 202, the charge power ability 204 is increased. The charge power ability 204 is exemplified as being continuously reduced until reaching a minimum level of charge power ability 210 at a predetermined maximum charge level 212. The predetermined maximum charge level 212 may be slightly before the high-voltage energy storage system 20 is fully charged. It should however be readily understood, although not depicted in Fig. 2, that the charge power ability 204 may be reduced to a preset limit when the charge level 202 exceeds the predetermined or pre-set charge level 206, i.e. a step wise reduction to a lower charge power ability level which is the same between the predetermined or pre-set charge level 206 and the predetermined maximum charge level 212.

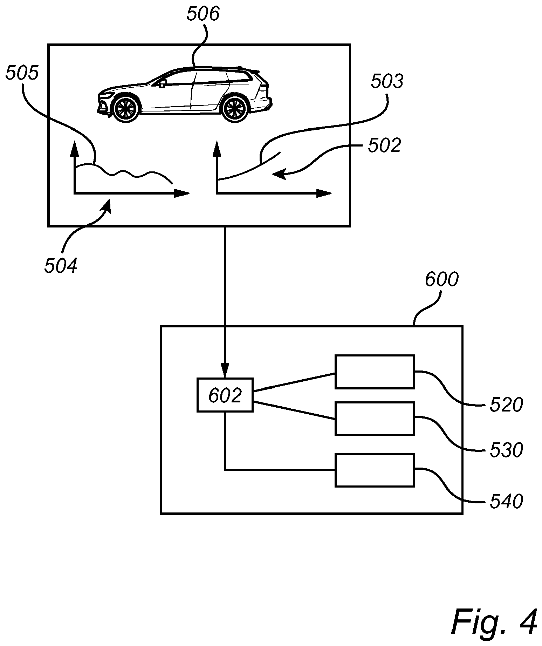

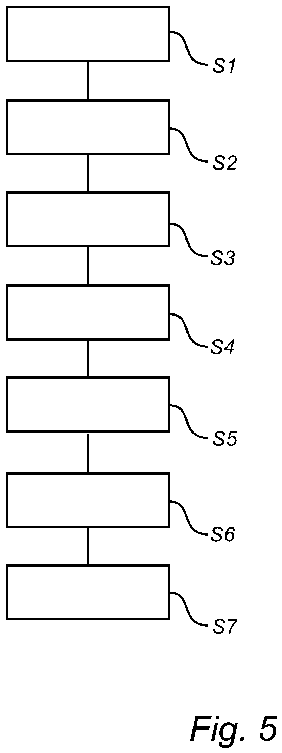

The following will now, with reference to Fig. 2 in combination with Figs. 3 - 5, describe a method of controlling charging of the high-voltage energy storage system 20 according to an example. The method will be described in relation to charging the high-voltage energy storage system 20 externally at a charging station 300 positioned at a charging position 320 but should be construed as also applicable for a hybrid vehicle, as well as when charging the high-voltage energy storage system 20 by electric power from the above described fuel cell 30 when the vehicle is driven. In the latter example, the charging position 320 is the current position of the vehicle 10 when the high-voltage energy storage system 20 is charged by electric power from the fuel cell 30. Fig. 3 is an exemplary illustration of upcoming road paths from a charging position according to an example, Fig. 4 is an exemplary illustration of a reference vehicle according to an example, and Fig. 5 is an exemplary flow chart of a method of controlling charging of the high-voltage energy storage system 20.

Before the high-voltage energy storage system 20 is charged with electric power at the charging station 300, the processing circuitry 602 determines S1 at least one upcoming road path operable 302 by the vehicle 10 from a current charging position 320. In the example depicted in Fig. 3, the processing circuitry 602 determines that the vehicle 10 will drive on the road path located east E from the charging position 320. The processing circuitry 701 may determine the upcoming road path to be operated by the vehicle 10 a manually inputted request of a destination to reach in combination with a global positioning system indicating the current position of the vehicle 10, from mission management data indicating the road path to be operated, from statistics data indicating a probable road path to be operated based on previous operation by the ego vehicle or from a fleet of vehicles operated in a similar manner, etc.

The processing circuitry 602 further determines if the upcoming road path 302 comprises a downhill slope 403. In the exemplification of Fig. 3, the road path 302 comprises a downhill slope 403 which is initiated a distance 460 from the charging position 320. In response to the road path 302 comprising the downhill slope 403, the processing circuitry 602 obtains S2 data 502 of a reference level of regenerative charge power 503 during operation at the downhill slope 403, as well as a net reference level of electric energy consumable 505 from the charging position 320 to the downhill slope 403.

Hence, the processing circuitry 602 determines, preferably for a nominal vehicle 506 which may also be referred to as a reference vehicle, how much electric energy that will be consumed from the charging position 320 to the initial position 455 of the downhill slope 403. In other words, the processing circuitry 602 may determine how much electric energy being consumed by a nominal high-voltage energy storage system for the nominal vehicle 506 when operated the distance 460 from the charging position 320 to the initial position 455, i.e. the crest, of the downhill slope 402. The operable distance 460 may comprise stretches of regenerative braking, i.e. where the high-voltage energy storage system is charged by electric power generated by the electric traction motor, as well as stretches of propulsion by the electric traction motor, i.e. where the high-voltage energy storage system feeds electric power to the electric traction motor. Hence, the net reference level of electric energy consumable 505 from the charging position 320 to the downhill slope 403 may comprise a level of electric energy consumed and a level of electric energy generated from the charging position to the downhill slope. Hereby, the processing circuitry 602 may determine a state of charge level of the nominal high-voltage energy storage system for the nominal vehicle 506 at the crest of the downhill slope for e.g. a fully charged energy storage system at the charging position 320.

Moreover, and as indicated above, the processing circuitry 602 may preferably obtain the reference level of regenerative charge power 503 and the net reference level of electric energy consumable 505 for a nominal vehicle 506 comprising a pre-set weight and which nominal vehicle 506 comprises a high-voltage energy storage system with a pre-set charge level. Other parameters may be incorporated for the nominal vehicle 506, such a predetermined/pre-set air drag resistance coefficient, a predetermined/pre-set rolling resistance, etc. The processing circuitry 602 may hence obtain the reference level of regenerative charge power 503 generated at the downhill slope 403 as well as the reference level electric energy consumable 505 until arriving at the crest of the downhill slope 403 by means of the predetermined/pre-set parameters of the nominal vehicle 506.

The processing circuitry 602 subsequently determines S3 a vehicle specific level of regenerative charge power for the electric traction motor 12 of the vehicle 10 for operating the vehicle 10 at a desired vehicle speed at the downhill slope 403. The vehicle specific level of regenerative charge power is determined in response to the above described reference level of regenerative charge power 503 as well as at least one vehicle specific parameter 520, 530, 540. In the examples of Figs. 1 and 4, the vehicle 10 is a truck while the nominal vehicle 506 is a passenger car. The regenerative charge power by the truck can thus be considered higher than the reference level of regenerative charge power 503 for the passenger car due to e.g. the higher weight of the truck compared to the pre-set weight of the passenger car.

The processing circuitry 602 thus determines how much electric power that will be generated by the vehicle 10 when operated at the downhill slope 403. In other words, the processing circuitry can re-calculate the reference level of regenerative charge power 503 during operation at the downhill slope 403 for the nominal vehicle 506 to a more correct level of regenerative charge power for the vehicle 10 taking the vehicle specific parameter 520, 530, 540 into account. The vehicle specific level of regenerative charge power may also be determined in response to an estimated vehicle speed at the downhill slope 403. The regenerative charge power is generally higher for a higher vehicle speed compared to a lower vehicle speed.

The processing circuitry 602 also determines S4 a vehicle specific net level of electric energy consumable by the high-voltage energy storage system 20 of the vehicle 10 from the charging position 320 to the downhill slope 403. In particular, the vehicle specific net level of electric energy consumable by the high-voltage energy storage system 20 may advantageously be determined from the charging position 320 to the crest of the downhill slope 403, i.e. for the distance 460 from the charging position 320 to the initial position 455, i.e. the crest, of the downhill slope 402. The vehicle specific net level of electric energy consumable by the high-voltage energy storage system 20 is determined in response to the above described net reference level of consumable electric energy 505 as well as at least one vehicle specific parameter 520, 530, 540. In a similar vein as described above, a nominal vehicle 506 in the form of a passenger car may consume a different level of electric power for a stretch of road ahead compared to a vehicle 10 in the form of a truck due to e.g. the higher weight of the truck compared to the pre-set weight of the passenger car.

The processing circuitry 602 thus determines how much electric energy that will be consumed by the vehicle 10 when operated the distance from the charging position 320 to the downhill slope 403. In other words, the processing circuitry can re-calculate the reference level of consumable electric energy 505 during from the charging position 320 to the initial position 455, i.e. the crest, of the downhill slope 402 to a more correct level of electric energy that will be consumed for the vehicle 10 taking the vehicle specific parameter 520, 530, 540 into account.

The vehicle specific parameter 520, 530, 540 may, as indicated above, be the weight 520 of the vehicle 10. The vehicle specific parameter may, in addition or alternatively, be a state of health 530 of the high-voltage energy storage system and an ambient condition 540 affecting the vehicle 10. In the latter example, the ambient condition may be a current weather condition. The nominal vehicle 506 may also be associated with corresponding reference parameters. Thus, the reference vehicle may be associated with a pre-set weight, a pre-set state of health of its energy storage system, as well as pre-set ambient condition. With reference to the ambient condition in the form of a current weather condition, the nominal vehicle 506 may be provided with a pre-set air drag coefficient, and the corresponding vehicle specific parameter relating to the current weather condition may be provided with an air drag coefficient for the vehicle 10.

In response to the determined vehicle specific level of regenerative charge power for the vehicle at the downhill slope 403, the processing circuitry 602 determines S5 a required charge power ability 510 (Fig. 2) for the high-voltage energy storage system 20 of the vehicle. In particular, the processing circuitry 602 determines a minimum charge power ability 510 for the high voltage energy storage system 20 to be able to absorb the determined regenerative charge power when the vehicle 10 is driven at the desired speed along the downhill slope 403. As can be seen in Fig. 2, the required charge power ability 510 is associated with a maximum allowable charge level 512 of the energy storage system 20. In detail, the charge level of the high-voltage energy storage system 20 should not exceed the maximum allowable charge level 512 for the high-voltage energy storage system 20 to be able to absorb the determined regenerative charge power.

The processing circuitry 602 further sets S6 a maximum charge level of the high-voltage energy storage system 20 at the charging position 320 in response to the vehicle specific net level of electric energy consumable by the high-voltage energy storage system 20 and the required charge power ability 510. Hence, the maximum charge level at the charging position 320 is determined by evaluating how much electric energy that has been consumed until arriving at the downhill slope 403.

Fig. 2 further illustrates the charge level 514 of the high-voltage energy storage system 20 at the downhill slope in an exemplified situation where the high-voltage energy storage system 20 is charged to its maximum capacity at the charging position 320. As can be seen, a vehicle specific net level of electric energy 518 has been consumed by the high-voltage energy storage system 20 during traveling the distance 460 from the charging position 320 to the crest of the downhill slope 403. The charge level 514 in this example corresponds to a charge power ability 516 which is lower than the required charge power ability 510 that is required to absorb the determined regenerative charge power. As such, the high-voltage energy storage system 20 should not be charged to its maximum capacity at the charging station 320. Conversely, the maximum charge level at the charging position 320 may preferably at least be reduced from a maximum capacity by a level corresponding to a difference 519 between the charge level 514 at the downhill slope for a fully charged high-voltage energy storage and the maximum allowable charge level 512 at the downhill slope 320.

Thereafter, during charging of the high-voltage energy storage system 20 at the charging position 320, the processing circuitry 602 controls S7 charging of the high-voltage energy storage system 20 to an energy level to, or below, the maximum charge level. Hence, the processing circuitry 602 controls charging of the high-voltage energy storage system 20 to not exceed the maximum charge level at the charging position 320.

As indicated above, the vehicle speed during a downhill slope may affect the vehicle specific level of regenerative charge power. Thus, a lower vehicle speed generally results in a lower level of regenerative charge power during operation at the downhill slope. The processing circuitry 602 may therefore only set a maximum charge level of the high-voltage energy storage system 20 when an estimated vehicle speed at the downhill slope exceeds a pre-set speed threshold limit. For a vehicle speed below the pre-set speed threshold limit it can be assumed that the high-voltage energy storage system will be able to absorb the level of regenerative charge power irrespective of the charge level at the downhill slope. In particular, for such low vehicle speed, brake blending using the service brakes can be performed without substantially any risk of overheating such service brakes.

Also, if the distance 460 from the charging position 320 to the downhill slope 403 is sufficiently long, it can be assumed that the high-voltage energy storage system 20 will consume a high level of electric energy, such that the charge level when the vehicle 10 arrives at the downhill slope 403 will be below the above described pre-set charge level 206. Hence, the processing circuitry may also be configured to control charging of the high-voltage energy storage system at the current charging position to the energy level to, or below, the maximum charge level only in response to a distance from the charging position to the downhill slope being less than a pre-set distance threshold limit.

Furthermore, and as depicted in Fig. 3, the processing circuitry may also be configured to divide the at least one upcoming road path 302 into a plurality of road path sections 301, 301', 301". The processing circuitry 602 can obtain data of the net reference level of electric energy consumable from the charging position 320 to the downhill slope 403 for each of the road path sections 301, 301', 301".

Moreover, there may be situations where the vehicle 10 may take alternative road paths to arrive at the destination. Fig. 3 illustrates a situation where the at least one upcoming road path comprises a first road path 302, i.e. the one described above, and a second road path 304. As described above, the first road path 302 is located east E from the charging position 320. The second road path 304 on the other hand is located west W from the charging position 320. The second road path 304 comprises a second downhill slope 405. In this situation, the processing circuitry 602 may obtain data of a reference level of regenerative charge power during operation at the first downhill slope 403 as well as at the second downhill slope 405. The processing circuitry 602 may also obtain a net reference level of electric energy consumable from the charging position 320 to both the first downhill slope and to the second downhill slope. The data of the reference level of regenerative charge power for the first and second downhill slopes, as well as the data of the net reference level of electric energy consumable from the charging position 320 to both the first downhill slope and to the second downhill slope may be obtained in a similar manner as described above.

The processing circuitry 602 may thereafter determine the vehicle specific level of regenerative charge power for the electric traction motor 12 based on the downhill slope, of the first 403 and second 405 downhill slopes, generating the largest reference level of regenerative charge power. Hence, charging of the high-voltage energy storage system 20 is controlled in response to the worst case to ensure that the high-voltage energy storage system 20 will be able to absorb the regenerative charge power.

The processing circuitry 602 may also determine the vehicle specific net level of electric energy consumable by the high-voltage energy storage system from the charging position 320 to the downhill slope, of the first downhill slope 403 and the second downhill slope 405, generating the largest reference level of regenerative charge power.

Fig. 6 is a schematic diagram of a computer system 600 for implementing examples disclosed herein. The computer system 600 is adapted to execute instructions from a computer-readable medium to perform these and/or any of the functions or processing described herein. The computer system 600 may be connected (e.g., networked) to other machines in a LAN (Local Area Network), LIN (Local Interconnect Network), automotive network communication protocol (e.g., FlexRay), an intranet, an extranet, or the Internet. While only a single device is illustrated, the computer system 600 may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system 600 may comprise at least one computing device or electronic device capable of including firmware, hardware, and/or executing software instructions to implement the functionality described herein. The computer system 600 may include processing circuitry 602 (e.g., processing circuitry including one or more processor devices or control units), a memory 604, and a system bus 606. The computer system 600 may include at least one computing device having the processing circuitry 602. The system bus 606 provides an interface for system components including, but not limited to, the memory 604 and the processing circuitry 602. The processing circuitry 602 may include any number of hardware components for conducting data or signal processing or for executing computer code stored in memory 604. The processing circuitry 602 may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry 602 may further include computer executable code that controls operation of the programmable device.

The system bus 606 may be any of several types of bus structures that may further interconnect to a memory bus (with or without a memory controller), a peripheral bus, and/or a local bus using any of a variety of bus architectures. The memory 604 may be one or more devices for storing data and/or computer code for completing or facilitating methods described herein. The memory 604 may include database components, object code components, script components, or other types of information structure for supporting the various activities herein. Any distributed or local memory device may be utilized with the systems and methods of this description. The memory 604 may be communicably connected to the processing circuitry 602 (e.g., via a circuit or any other wired, wireless, or network connection) and may include computer code for executing one or more processes described herein. The memory 604 may include non-volatile memory 608 (e.g., read-only memory (ROM), erasable programmable read-only memory (EPROM), electrically erasable programmable read-only memory (EEPROM), etc.), and volatile memory 610 (e.g., randomaccess memory (RAM)), or any other medium which can be used to carry or store desired program code in the form of machine-executable instructions or data structures and which can be accessed by a computer or other machine with processing circuitry 602. A basic input/output system (BIOS) 612 may be stored in the non-volatile memory 608 and can include the basic routines that help to transfer information between elements within the computer system 600.

The computer system 600 may further include or be coupled to a non-transitory computer-readable storage medium such as the storage device 614, which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device 614 and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device 614 and/or in the volatile memory 610, which may include an operating system 616 and/or one or more program modules 618. All or a portion of the examples disclosed herein may be implemented as a computer program 620 stored on a transitory or non-transitory computer-usable or computer-readable storage medium (e.g., single medium or multiple media), such as the storage device 614, which includes complex programming instructions (e.g., complex computer-readable program code) to cause the processing circuitry 602 to carry out actions described herein. Thus, the computer-readable program code of the computer program 620 can comprise software instructions for implementing the functionality of the examples described herein when executed by the processing circuitry 602. In some examples, the storage device 614 may be a computer program product (e.g., readable storage medium) storing the computer program 620 thereon, where at least a portion of a computer program 620 may be loadable (e.g., into a processor) for implementing the functionality of the examples described herein when executed by the processing circuitry 602. The processing circuitry 602 may serve as a controller or control system for the computer system 600 that is to implement the functionality described herein.

The computer system 600 may include an input device interface 622 configured to receive input and selections to be communicated to the computer system 600 when executing instructions, such as from a keyboard, mouse, touch-sensitive surface, etc. Such input devices may be connected to the processing circuitry 602 through the input device
interface 622 coupled to the system bus 606 but can be connected through other interfaces, such as a parallel port, an Institute of Electrical and Electronic Engineers (IEEE) 1394 serial port, a Universal Serial Bus (USB) port, an IR interface, and the like. The computer system 600 may include an output device interface 624 configured to forward output, such as to a display, a video display unit (e.g., a liquid crystal display (LCD) or a cathode ray tube (CRT)). The computer system 600 may include a communications interface 626 suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

### EXAMPLE LIST

Example 1. A computer system comprising processing circuitry configured to control charging of a high-voltage energy storage system of a vehicle, the processing circuitry being configured to determine at least one upcoming road path operable by the vehicle from a current charging position, and in response to the at least one upcoming road path comprising a downhill slope obtain data of a reference level of regenerative charge power during operation at the downhill slope, and a net reference level of electric energy consumable from the charging position to the downhill slope, determine, based on the reference level of regenerative charge power and at least one vehicle specific parameter of the vehicle, a vehicle specific level of regenerative charge power for an electric traction motor of the vehicle for operating the vehicle at a desired vehicle speed at the downhill slope, determine, based on the net reference level of electric energy and the at least one vehicle specific parameter of the vehicle, a vehicle specific net level of electric energy consumable by the high-voltage energy storage system of the vehicle from the charging position to the downhill slope, determine a required charge power ability for the high-voltage energy storage system of the vehicle to receive the vehicle specific level of regenerative charge power at the downhill slope, set a maximum charge level of the high-voltage energy storage system in response to the vehicle specific net level of electric energy consumable by the high-voltage energy storage system and the required charge power ability, and control charging of the high-voltage energy storage system at the current charging position to an energy level to, or below, the maximum charge level.

Example 2. The computer system of example 1, wherein the reference level of regenerative charge power during operation at the downhill slope, and the net reference level of electric energy consumable from the charging position to the downhill slope are determined for a nominal vehicle.

Example 3. The computer system of example 2, wherein the nominal vehicle comprises a pre-set weight and comprises a high-voltage energy storage system with a pre-set charge level.

Example 4. The computer system of any one of the preceding examples, wherein the net reference level of electric energy consumable from the charging position to the downhill slope comprises a level of electric energy consumed and a level of electric energy generated from the charging position to the downhill slope.

Example 5. The computer system of any one of the preceding examples, wherein the vehicle specific parameter comprises a weight of the vehicle.

Example 6. The computer system of any one of the preceding examples, wherein the vehicle specific parameter comprises a state of health of the high-voltage energy storage system of the vehicle.

Example 7. The computer system of any one of the preceding examples, wherein the processing circuitry is further configured to determine the vehicle specific level of regenerative charge power and the vehicle specific net level of electric energy consumable by the high-voltage energy storage system in response to an ambient condition.

Example 8. The computer system of example 7, wherein the ambient condition is a current weather condition.

Example 9. The computer system of any one of the preceding examples, wherein the vehicle specific level of regenerative charge power is determined in response to an estimated vehicle speed at the downhill slope.

Example 10. The computer system of example 9, wherein the processing circuitry is configured to control charging of the high-voltage energy storage system at the current charging position to the energy level to, or below, the maximum charge level only in response to the estimated vehicle speed exceeds a pre-set speed threshold limit.

Example 11. The computer system of any one of the preceding examples, wherein the processing circuitry is configured to control charging of the high-voltage energy storage system at the current charging position to the energy level to, or below, the maximum charge level only in response to a distance from the charging position to the downhill slope being less than a pre-set distance threshold limit.

Example 12. The computer system of any one of the preceding examples, wherein the at least one upcoming road path comprises a first road path comprising a first downhill slope, and a second road path comprising a second downhill slope, wherein the processing circuitry is configured to obtain data of a reference level of regenerative charge power during operation at the first downhill slope and the second downhill slope, and a net reference level of electric energy consumable from the charging position to the first downhill slope and from the charging position to the second downhill slope, determine the vehicle specific level of regenerative charge power for the electric traction motor based on the downhill slope, of the first and second downhill slopes, generating the largest reference level of regenerative charge power.

Example 13. The computer system of example 12, wherein the processing circuitry is configured to determine the vehicle specific net level of electric energy consumable by the high-voltage energy storage system from the charging position to the downhill slope, of the first downhill slope and the second downhill slope, generating the largest reference level of regenerative charge power.

Example 14. The computer system of any one of the preceding examples, wherein the processing circuitry is configured to divide the at least one upcoming road path into a plurality of road path sections, and obtain data of the net reference level of electric energy consumable from the charging position to the downhill slope for each of the road path sections.

Example 15. The computer system of any one of the preceding examples, wherein the at least one upcoming road path section is determined in response to a manually inputted destination request.

Example 16. A vehicle comprising the computer system of any of the preceding examples.

Example 17. A computer-implemented method, comprising determining, by processing circuitry of a computer system, at least one upcoming road path operable by the vehicle from a current charging position, and in response to the at least one upcoming road path comprising a downhill slope obtaining, by the processing circuitry, data of a reference level of regenerative charge power during operation at the downhill slope, and a net reference level of electric energy consumable from the charging position to the downhill slope, determining, by the processing circuitry and based on the reference level of regenerative charge power and at least one vehicle specific parameter of the vehicle, a vehicle specific level of regenerative charge power for an electric traction motor of the vehicle for operating the vehicle at a desired vehicle speed at the downhill slope, determining, by the processing circuitry and based on the net reference level of electric energy and the at least one vehicle specific parameter of the vehicle, a vehicle specific net level of electric energy consumable by the high-voltage energy storage system of the vehicle from the charging position to the downhill slope, determining, by the processing circuitry, a required charge power ability for the high-voltage energy storage system of the vehicle to receive the vehicle specific level of regenerative charge power at the downhill slope, setting, by the processing circuitry, a maximum charge level of the high-voltage energy storage system in response to the vehicle specific net level of electric energy consumable by the high-voltage energy storage system and the required charge power ability, and controlling, by the processing circuitry, charging of the high-voltage energy storage system at the current charging position to an energy level to, or below, the maximum charge level.

Example 18. A computer program product comprising program code for performing, when executed by the processing circuitry, the method of example 17.

Example 19. A non-transitory computer-readable storage medium comprising instructions, which when executed by the processing circuitry, cause the processing circuitry to perform the method of example 17.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A computer system comprising processing circuitry configured to control charging of a high-voltage energy storage system of a vehicle, the processing circuitry being configured to:
- determine at least one upcoming road path operable by the vehicle from a current charging position, and in response to the at least one upcoming road path comprising a downhill slope:
- obtain data of a reference level of regenerative charge power during operation at the downhill slope, and a net reference level of electric energy consumable from the charging position to the downhill slope,
- determine, based on the reference level of regenerative charge power and at least one vehicle specific parameter of the vehicle, a vehicle specific level of regenerative charge power for an electric traction motor of the vehicle for operating the vehicle at a desired vehicle speed at the downhill slope,
- determine, based on the net reference level of electric energy and the at least one vehicle specific parameter of the vehicle, a vehicle specific net level of electric energy consumable by the high-voltage energy storage system of the vehicle from the charging position to the downhill slope,
- determine a required charge power ability for the high-voltage energy storage system of the vehicle to receive the vehicle specific level of regenerative charge power at the downhill slope,
- set a maximum charge level of the high-voltage energy storage system in response to the vehicle specific net level of electric energy consumable by the high-voltage energy storage system and the required charge power ability, and
- control charging of the high-voltage energy storage system at the current charging position to an energy level to, or below, the maximum charge level.

2. The computer system of claim 1, wherein the reference level of regenerative charge power during operation at the downhill slope, and the net reference level of electric energy consumable from the charging position to the downhill slope are determined for a nominal vehicle.

3. The computer system of claim 2, wherein the nominal vehicle comprises a pre-set weight and comprises a high-voltage energy storage system with a pre-set charge level.

4. The computer system of any one of the preceding claims, wherein the net reference level of electric energy consumable from the charging position to the downhill slope comprises a level of electric energy consumed and a level of electric energy generated from the charging position to the downhill slope.

5. The computer system of any one of the preceding claims, wherein the vehicle specific parameter comprises a weight of the vehicle.

6. The computer system of any one of the preceding claims, wherein the vehicle specific parameter comprises a state of health of the high-voltage energy storage system of the vehicle.

7. The computer system of any one of the preceding claims, wherein the processing circuitry is further configured to determine the vehicle specific level of regenerative charge power and the vehicle specific net level of electric energy consumable by the high-voltage energy storage system in response to an ambient condition.

8. The computer system of any one of the preceding claims, wherein the vehicle specific level of regenerative charge power is determined in response to an estimated vehicle speed at the downhill slope.

9. The computer system of any one of the preceding claims, wherein the at least one upcoming road path comprises a first road path comprising a first downhill slope, and a second road path comprising a second downhill slope, wherein the processing circuitry is configured to:
- obtain data of a reference level of regenerative charge power during operation at the first downhill slope and the second downhill slope, and a net reference level of electric energy consumable from the charging position to the first downhill slope and from the charging position to the second downhill slope,
- determine the vehicle specific level of regenerative charge power for the electric traction motor based on the downhill slope, of the first and second downhill slopes, generating the largest reference level of regenerative charge power.

10. The computer system of claim 9, wherein the processing circuitry is configured to determine the vehicle specific net level of electric energy consumable by the high-voltage energy storage system from the charging position to the downhill slope, of the first downhill slope and the second downhill slope, generating the largest reference level of regenerative charge power.

11. The computer system of any one of the preceding claims, wherein the processing circuitry is configured to divide the at least one upcoming road path into a plurality of road path sections, and obtain data of the net reference level of electric energy consumable from the charging position to the downhill slope for each of the road path sections.

12. A vehicle comprising the computer system of any of the preceding claims.

13. A computer-implemented method, comprising:
- determining, by processing circuitry of a computer system, at least one upcoming road path operable by the vehicle from a current charging position, and in response to the at least one upcoming road path comprising a downhill slope:
- obtaining, by the processing circuitry, data of a reference level of regenerative charge power during operation at the downhill slope, and a net reference level of electric energy consumable from the charging position to the downhill slope,
- determining, by the processing circuitry and based on the reference level of regenerative charge power and at least one vehicle specific parameter of the vehicle, a vehicle specific level of regenerative charge power for an electric traction motor of the vehicle for operating the vehicle at a desired vehicle speed at the downhill slope,
- determining, by the processing circuitry and based on the net reference level of electric energy and the at least one vehicle specific parameter of the vehicle, a vehicle specific net level of electric energy consumable by the high-voltage energy storage system of the vehicle from the charging position to the downhill slope,
- determining, by the processing circuitry, a required charge power ability for the high-voltage energy storage system of the vehicle to receive the vehicle specific level of regenerative charge power at the downhill slope,
- setting, by the processing circuitry, a maximum charge level of the high-voltage energy storage system in response to the vehicle specific net level of electric energy consumable by the high-voltage energy storage system and the required charge power ability, and
- controlling, by the processing circuitry, charging of the high-voltage energy storage system at the current charging position to an energy level to, or below, the maximum charge level.

14. A computer program product comprising program code for performing, when executed by the processing circuitry, the method of claim 13.

15. A non-transitory computer-readable storage medium comprising instructions, which when executed by the processing circuitry, cause the processing circuitry to perform the method of claim 13.
